# EUROPÄISCHE PATENTSCHRIFT

(11) **EP 0 361 053 B1**
(45) Veröffentlichungstag und Bekanntmachung des Hinweises auf die Patenterteilung: **05.01.1994**
(21) Anmeldenummer: 89115073.2
(22) Anmeldetag: 16.08.1989
(51) Int. Cl.: B60H 1/00

(54) **Heizvorrichtung für den Fahrgastraum eines eine flüssigkeitsgekühlte Brennkraftmaschine aufweisenden Kraftfahrzeuges**
Heating device for the interior of a fluid-cooled internal-combustion engine of an automotive vehicle
Dispositif de chauffage pour l'intérieur d'un véhicule automobile muni d'un moteur à combustion interne à fluide de refroidissement

(30) Priorität: 29.09.1988 DE 3832966
(43) Veröffentlichungstag der Anmeldung: 04.04.1990
(73) Patentinhaber: ROBERT BOSCH GMBH, 70442 Stuttgart (DE)
(72) Erfinder: Bertling, Johannes-Gerhard, Dr. Dipl.-Ing., D-7143 Vaihingen/Enz (DE)

(56) Entgegenhaltungen:
- EP-A- 0 218 883
- EP-A- 0 233 811
- DE-A- 3 147 468
- US-A- 3 720 372

## Beschreibung

### Stand der Technik

Beim Start eines Fahrzeugmotors nach längerem Stillstand steht zunächst keine Heizenergie für den Fahrgastraum zur Verfügung. Beispielsweise bei den modernen, mit hohem Wirkungsgrad arbeitenden PKW-Dieselmotoren sind sogar Betriebszustände möglich, bei denen auch über längere Fahrstrecken keine ausreichende Heizenergie anfällt. Für derartige Fälle ist eine kostengünstige Zusatzheizvorrichtung eine vorteilhafte Alternative zu den zwar befriedigend arbeitenden, aber sehr teuren Standheizungen.

Die Erfindung geht aus von einer Heizvorrichtung nach der Gattung des Hauptanspruchs. Es ist schon eine Heizvorrichtung bekannt (DE-A-14 76 328), bei der ein parallel zum Kühlkreislauf für die Brennkraftmaschine geschaltetes Heizgerät angeordnet ist, das im wesentlichen aus einem kraftstoffverbrauchenden Brenner und aus einem Kessel besteht. Um einem Wärmetauscher für die Fahrzeugheizung heißes Wasser zuzuführen, muß das Wasser im Kessel bis zur Dampfbildung erhitzt werden. Ein Befüllen des Kessels mit kaltem Wasser aus dem Wassermantel der Brennkraftmaschine erfolgt nach Sinken des Wasserspiegels im Kessel und Ablassen des Dampfes in den Wassermantel über ein Schwimmerventil. Eine derartig aufgebaute Heizvorrichtung arbeitet träge und ihre Betriebsweise ist umständlich. Weiter ist bei bestimmten Betriebszuständen der Brennkraftmaschine die Heizleistung dieser Heizvorrichtung mangelhaft.

Eine andere bekannte Heizvorrichtung (DE-A-31 47 468) arbeitet nach dem Prinzip der hydrodynamischen Bremse, wobei das vom Schaufelrad beschleunigte Kühlwasser in der Schaufelkammer des Stators verzögert wird. Die kinetische Energie wird dabei in der umlaufenden Kühlwassermenge direkt in Wärme umgesetzt, so daß ein relativ hoher Wirkungsgrad erzielt wird. Nachteilig ist dabei aber, daß auf dem Prinzip der hydrodynamischen Bremse beruhende Heizvorrichtungen eine Leistungscharakteristik haben, die von der dritten Potenz der Antriebsdrehzahl abhängt. Damit wird im unteren Drehzahlbereich unverhältnismäßig wenig Heizleistung bereitgestellt.

### Vorteile der Erfindung

Die erfindungsgemäße Heizvorrichtung mit den kennzeichnenden Merkmalen des Hauptanspruchs hat demgegenüber den Vorteil, daß der Fahrgastraum des Kraftfahrzeuges, auch bei zur Beheizung ungünstigen Betriebszuständen der Brennkraftmaschine rasch, zuverlässig und ausreichend mit Wärme versorgt werden kann, weil bei einer nach dem Prinzip einer Viskosebremse aufgebauten Heizvorrichtung die Wärmeleistung mit der zweiten Potenz der Antriebsdrehzahl ansteigt. Damit steht auch im unteren Drehzahlbereich eine ausreichende Heizleistung zur Verfügung. Weiter ist der Aufbau der erfindungsgemäßen Heizvorrichtung einfach und kompakt. Sie läßt sich verschleißfrei betreiben und mitgeringem Aufwand regeln. Aufgrund der newtonschen Reibung zwischen dem umlaufenden Element und dem gestellfesten Bauteil ergibt sich eine Bremsleistung, die der Heizvorrichtung als Heizwärme zur Verfügung steht. Die Bremsleistung der Heizvorrichtung addiert sich somit zu der vom Antriebsmotor aufgebrachten Wärmeleistung.

Durch die in den Unteransprüchen aufgeführten Maßnahmen sind vorteilhafte Weiterbildungen und Verbesserungen der im Hauptanspruch angegebenen Heizvorrichtung möglich.

### Zeichnung

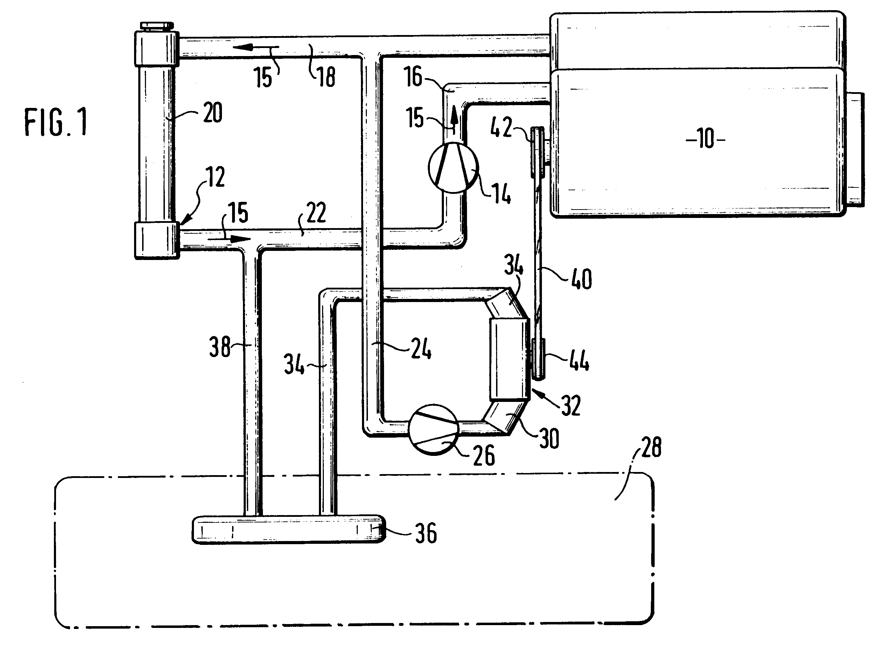

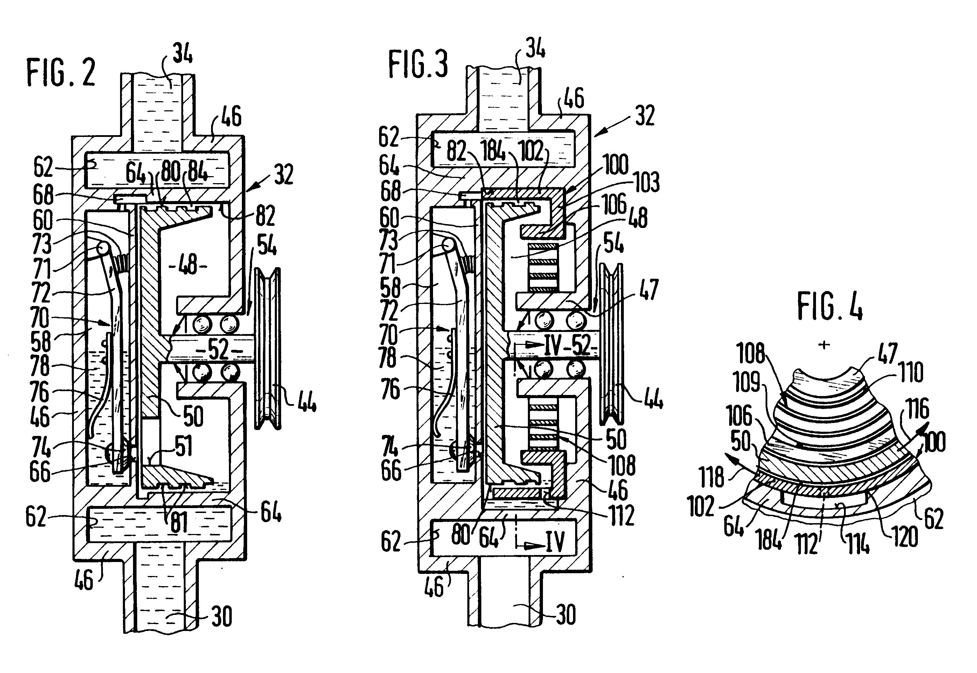

Ausführungsbeispiele der Erfindung sind in der Zeichnung dargestellt und in der nachfolgenden Beschreibung näher erläutert. Es zeigen Figur 1 eine Prinzipdarstellung des Kühlkreislaufes einer flüssigkeitsgekühlten Brennkraftmaschine mit einer Heizvorrichtung für den Fahrgastraum eines von der Brennkraftmaschine angetriebenen Kraftfahrzeuges, Figur 2 einen Schnitt durch ein zur Heizvorrichtung gehörendes Heizaggregat, Figur 3 einen Schnitt gemäß Figur 2, durch eine andere Ausführung des Heizaggregats und Figur 4 einen Schnitt durch das Heizaggregat gemäß Figur 3, entlang der Linie IV-IV.

### Beschreibung der Ausführungsbeispiele

Figur 1 zeigt eine Brennkraftmaschine 10 eines nicht näher dargestellten Kraftfahrzeuges, die über einen Kühlmittelkreislauf 12 flüssigkeitsgekühlt ist. Dazu weist der Kühlkreislauf 12 eine Kühlmittelpumpe 14 auf, die mit den nicht dargestellten Kühlmittelkanälen im Mantel der Brennkraftmaschine 10 über eine Druckleitung 16 leitungsverbunden ist. Weiter ist an den Kanälen der Brennkraftmaschine 10 eine Leitung 18 angeschlossen, die von der Brennkraftmaschine 10 zu einem luftgekühlten Kühler 20 führt. Der Kühler 20 ist über eine Rückführleitung 22 mit der Kühlmittelpumpe 14 verbunden. Die Pumpe 14 fördert also die Kühlflüssigkeit in Richtung der Pfeile 15 über die Druckleitung 16 und die Kanäle der Brennkraftmaschine 20 in die Leitung 18 von der aus das Kühlmittel in den Kühler 20 gelangt und dort wieder heruntergekühlt über die Leitung 22, die Kühlmittelpumpe 14 und die Druckleitung 16 wieder in den Mantel der Brennkraftmaschine 10 gelangt. An der das erhitzte Kühlmittel führenden Leitung 18 ist eine Zulauf- oder Zweigleitung 24 angeschlossen, welche zu einer Förderpumpe 26 führt, die zu einer Heizvorrichtung für den Fahrgastraum 28 des Kraftfahrzeuges gehört. Von der Förderpumpe 26 führt eine Verbindungsleitung 30 zu einem Heizaggregat 32, von dem aus eine Heizleitung 34 zu einem Wärmetauscher 36 im Fahrgastraum 28 des Kraftfahrzeuges führt. Aus dem Wärmetauscher 36 tritt eine Leitung 38 aus, die mit der Rückführleitung 22 des Kühlmittelkreislaufes 12 leitungsverbunden ist. Das Heizaggregat 32 ist über einen Riementrieb 40 mit einem Abtriebsrad 42 mit der Brennkraftmaschine 10 antriebsverbunden. Zu dem Riementrieb 40 gehört eine Riemenscheibe 44 des Heizaggregats 32, das in Figur 2 im Schnitt dargestellt und im folgenden näher erläutert ist.

Das Heizaggregat 32 weist ein Gehäuse 46 auf, das eine Arbeitskammer 48 umschließt. In der Arbeitskammer ist ein im Querschnitt topfförmiges Rad 50 angeordnet, das über eine Antriebswelle 52 mit der außerhalb des Heizaggregats 32 befindlichen Riemenscheibe 44 verbunden ist. Die Antriebswelle 52 ist bei 54 in dem Aggregatgehäuse 46 gelagert. Auf der von der Riemenscheibe 44 abgewandten Seite der Arbeitskammer 48 befindet sich eine Vorratskammer 58, die ebenfalls von dem Gehäuse 46 umschlossen ist. Die Vorratskammer 58 ist von der Arbeitskammer 48 durch eine Zwischenwand 60 getrennt. Die Arbeitskammer 48 ist im wesentlichen zylindrisch ausgebildet, wobei ihre Zylinderachse identisch mit der Drehachse der Antriebswelle 52 ist. Weiter ist die Arbeitskammer 48 von einer Ringkammer 62 umgeben, die ebenfalls von einer Gehäusewand 46 des Heizaggregats 32 an ihrer Außenseite umschlossen ist. Zwischen der Arbeitskammer 48 und der Ringkammer 62 befindet sich eine ebenfalls ringförmige Trennwand 64. Die Ringkammer 62 ist einerseits mit der Heizleitung 34 und zum anderen mit der Verbindungsleitung 30 leitungsverbunden (siehe auch Figur 1). Im unteren Bereich ist die Zwischenwand 60 mit einem Durchbruch 66 versehen, über den die Vorratskammer 58 mit der Arbeitskammer 48 verbunden ist. Im oberen Bereich der Vorratskammer 58 ist eine Verbindungskanal 68 angeordnet, der die Vorratskammer 58 ebenfalls mit der Arbeitskammer 48 verbindet. Von einer gewissen Bedeutung ist dabei, daß der Eintritt des Verbindungskanals 68 in die Arbeitskammer 48 an deren Mantelfläche erfolgt. Der Verbindungskanal 68 mündet also nahe der Zwischenwand 60 im Bereich der äußeren Topfwand des im Querschnitt topfförmigen Rades 50 in die Arbeitskammer 48. Schließlich ist in der Vorratskammer 58 eine Schließvorrichtung 70 für den Durchbruch 66 vorhanden. Dazu weist die Schließvorrichtung 70 einen bei 71 einseitig gelagerten Hebel 72 auf, der über ein elastisches Element 73 an der Zwischenwand 60 abgestützt ist. Nahe seinem freien Ende ist der Hebel 72 mit einem Schließelement 74 versehen, das in der einen Betriebsstellung des Hebels 72 den Durchbruch 66 verschließt. Diese Betriebsstellung ist in Figur 2 dargestellt. Dies wird durch ein beim Ausführungsbeispiel aus einem Bimetall gefertigten Blattfeder 76 bewirkt, die auf der von der Zwischenwand 60 abgewandten Seite des Hebels 72 angeordnet ist und die sich vorgespannt an der äußeren Gehäusewand 46 des Heizaggregats 32 vorgespannt abstützt. In der in Figur 2 gezeigten Betriebsstellung ist die Vorspannung der Blattfeder 76 großer als die Öffnungsrichtung des Schließelement 74 wirkenden Kraft des elastischen Elements 73. Schließlich ist aus Figur 2 noch ersichtlich, daß der Vorratsbehälter 58 etwa bis zur Hälfte mit einer Viskoseflüssigkeit 78 gefüllt ist. Das Rad 50 ist im Bereich seines Topfbodens, auf Höhe des Durchbruchs 66, mit mehreren Ausnehmungen 51 versehen, von denen eine in Figur 2 gezeigt ist. Die Ausnehmungen 51 sorgen dafür, daß Viskoseflüssigkeit von dem Durchbruch 66 aus auf die von der Zwischenwand 60 abgewandte Seite des Rades 50 in die Arbeitskammer 48 gelangen kann. Weiter hat das Rad 50 an seiner äußeren Topfwand 80 eine gewindeartige Struktur, die beim Ausführungsbeispiel als Nut 81 ausgebildet ist. Dabei ist die Steigung der Nut 81 so gewählt, daß bei umlaufendem Rad 50 die Viskoseflüssigkeit zum Verbindungskanal 68 gedrückt wird.

Im Betrieb arbeitet die Heizvorrichtung 32 wie folgt:
Immer wenn die Brennkraftmaschine sich dreht, wird das Heizaggregat 32 über den Riementrieb 40, 42, 44 in Betrieb gesetzt. Wenn der Kühlmittelkreislauf 12 jedoch nicht die zur Beheizung erforderliche Temperatur erreicht hat, gibt die Bimetallfeder 72 den Durchbruch 66 in der Zwischenwand 60 frei, weil die Kraft des elastischen Elements 73 die Spannkraft der Bimetallfeder 76 übersteigt. Es tritt also über den als Leitung wirkenden Durchbruch 66 Viskoseflüssigkeit 78 aus der Vorratskammer 58 in die Arbeitskammer 48 ein, wo sie durch die Ausnehmungen 51 hindurch auf die von der Zwischenwand 60 abgewandte Seite des Rades 50 gelangt. Dort wird sie von dem Rad 50 mitgenommen, wobei sie sich im wesentlichen zwischen der äußeren Mantelfläche 80 des Rades 50 und der dieser zugewandten zylinderförmigen Innenwand 82 der Arbeitskammer 48 befindet. Diese beiden einander zugekehrten Wände begrenzen einen Ringspalt 84, der auch als Arbeits- oder Reibspalt bezeichnet werden kann. Die Viskoseflüssigkeit 78 ist so gewählt, daß dabei eine hohe innere Reibung entsteht, welche zu einer raschen Erwärmung der Viskoseflüssigkeit 78 in der Arbeitskammer 48 führt. Diese Wärme wird über die Trennwand 64 der in der Ringkammer 62 befindlichen Kühlflüssigkeit zugeführt, wo die Wärme über die Heizleitung 34 zum Wärmetauscher 36 und von dort aus über die Leitung 38 in die Rückführleitung 22 des Kühlmittelkreislaufs 12 gelangt. Die Heizpumpe 26 fördert diese Kühlflüssigkeit über die Zweigleitung 24 und Verbindungsleitung 30 in die Ringkammer 62 des Heizaggregats 32. Da die Zweigleitung 24 an der von der Brennkraftmaschine 10 zum Kühler 20 führenden Leitung 18 angeschlossen ist, wird auch die dort möglicherweise schon vorhandene, geringe Wärme zur Erwärmung des Fahrgastraumes 28 genutzt. Mit zunehmender Erwärmung des Heizaggregats 32 wird die Bimetallfeder 76 mehr und mehr gespannt, bis deren Spannkraft die Gegenkraft des elastischen Elements 73 übersteigt und das Schließglied 74 die Durchgangsbohrung 66 in der Zwischenwand 60 verschließt. Die in der Arbeitskammer 48 vorhandene, überschüssige Viskoseflüssigkeit 78 wird über einen nicht dargestellten Abstreifer im Bereich des Verbindungskanals 68 vom Rad 50 abgestreift, so daß sie über den Verbindungskanal 68 wieder in die Vorratskammer 58 zurückgeführt wird. Dadurch ergibt sich bei geschlossener Durchgangsbohrung 66 nach kurzer Zeit ein Betriebszustand, in welchem die in der Arbeitskammer 48 vorhandene Rest-Viskoseflüssigkeit nicht mehr ausreicht, um eine Wärmeerzeugung im Heizaggregat 32 zu erreichen. Sollte eine solche Wärmeerzeugung wieder erforderlich sein, leitet die auf eine bestimmte Temperatur geeichte Bimetallfeder 76 einen erneuten Beheizungsvorgang ein, in dem sich ihre Vorspannung so verändert, daß das vorgespannte, elastische Element 73 in der Lage ist, den Hebel 72 in Gegenuhrzeigersinn zu verschwenken und damit den Durchbruch 66 zu öffnen.

Bei der Ausführungsform gemäß den Figuren 3 und 4 stimmt der wesentliche Aufbau des Heizaggregats 132 mit dem eben beschriebenen Heizaggregat 32 überein. Deshalb sind dort alle im Hinblick auf die Ausführungsform gemäß Figur 2 unveränderten Elemente mit den dort verwendeten Bezugszeichen versehen worden. Abweichend von der schon beschriebenen Ausführungsform sind bei der Ausführung gemäß den Figuren 3 und 4 folgende Anderungen vorgenommen worden:
An der die äußere Mantelfläche 80 des Rades 50 umgebenden inneren Mantelfläche 82 der Zwischenwand 64 ist ein Ring 100 in dessen Umfangsrichtung drehbar geführt. Der Ring 100 hat einen Basisring 102, mit einem im wesentlichen rechteckigen Querschnitt, dessen Länge sich parallel zur Drehachse des Rades 50 erstreckt. Weiter hat der Basisring 102 einen zur Drehachse sich quer erstreckenden Fortsatz 103, mit dem er den Topfrand des im Querschnitt topfförmigen Rades 50 überquert. Schließlich erstreckt sich ein inneres Teilstück 106 des Rings 100 in das Topfinnere des Rades 50. An der Innenwand dieses Teilstücks 106 ist das eine Ende 109 einer Spiralfeder 108 befestigt, deren anderes Ende 110 an einem sich in die Arbeitskammer 48 erstreckenden Lagerauge 47 der Lagerung 54 für die Antriebswelle 52 festgelegt ist (Fig. 4). Weiter ist im unteren Bereich des Ringes 100 im Basisring 102 eine Steuerbohrung 112 vorhanden, die von der Arbeitskammer 48 aus zu einer Vertiefung 114 führt, die in der Zwischenwand 64 zwischen der Arbeitskammer 48 und der Ringkammer 62 angeordnet ist. Die Drehrichtung des Rades 50 ist in Figur 4 mit einem Pfeil 116 bezeichnet worden. Die Spiralfeder 108 ist entgegen der Raddrehrichtung 116 in Richtung des Pfeiles 118 vorgespannt. In Drehrichtung 116 gesehen bildet die eine Begrenzung der Vertiefung 114 eine Steuerkante 120 für die Bohrung 112. Der Reibspalt 184 ist bei dieser Ausführungsform zwischen der äußeren Mantelfläche 80 des Rades 50 und der inneren Mantelfläche des Basisrings 102 des Rings 100 gebildet. Der Ring 100 ist durch die Spiralfeder 108 derart vorgespannt, daß sich die Bohrung 112 im Bereich der Vertiefung 114 befindet (Figur 4). Wenn jedoch das zwischen dem Rad 50 und der Innenwand des Basisrings 102 auftretende Reibmoment die Vorspannung der Spiralfeder 108 übersteigt, wird der Ring 100 in Richtung des Drehrichtungspfeils 116 und der Verstärkung der Spannung in der Spiralfeder 108 in Richtung des Pfeiles 116 mitgenommen, bis sich schließlich die Bohrung 112 hinter der als Steuerkante 120 wirkenden einen Begrenzung Vertiefung 114 befindet. Damit ist eine einfache Begrenzung des maximalen Reibmoments möglich. Durch Mitnahme des Rings 100 in der eben beschriebenen Weise können beispielsweise auch weitere Ablauföffnungen freigegeben werden, welche dem Kanal 68 entsprechen, so daß sich ein beschleunigter Rücktransport der Viskoseflüssigkeit in dem Vorratsbehälter 58 ergibt.

Bei den Ausführungsbeispielen ist gemeinsam, daß sich während des Betriebs der Heizvorrichtung in der Kammer 50 eine Viskoseflüssigkeit 78 befindet, daß die Kammer 50 von der Kühlflüssigkeit der Brennkraftmaschine 10 umspült ist und daß diese Kühlflüssigkeit von der Heizvorrichtung zu einem Wärmetauscher 36 im Fahrgastraum 28 und von dort aus über die Brennkraftmaschine 10 wieder zur Heizvorrichtung 32 strömt.

Auch wenn bei dem Ausführungsbeispiel gemäß der Figuren 3 und 4 das eine, den Reibspalt begrenzende Element (Ring 100) bei bestimmten Betriebszuständen vorübergehend verdrehbar ist, ist es im Sinne der Erfindung doch als gestellfest anzusehen, weil es während der Heizphase, gegenüber dem den Reibspalt auf der anderen Seite begrenzenden Element (Rad bzw. Radmantelfläche 80) gestellfest ist.

## Patentansprüche

1. Heizvorrichtung für den Fahrgastraum eines eine flüssigkeitsgekühlte Brennkraftmaschine (10) aufweisenden Kraftfahrzeuges, mit einem in einer mediumbefüllten Kammer (58) durch die Brennkraftmaschine (10) umlaufend angetriebenen Element (50), dem über zumindest einen Spalt ein gestellfest angeordnetes Bauteil zugeordnet ist, dadurch gekennzeichnet, daß sich in der Kammer (58) eine Viskoseflüssigkeit (78) befindet, daß die Kammer (58) von der Kühlflüssigkeit der Brennkraftmaschine (10) umspült ist und daß diese Kühlflüssigkeit von der Heizvorrichtung (32) zu einem Wärmetauscher (36) im Fahrgastraum (28) und von dort aus über die Brennkraftmaschine (10) wieder zur Heizvorrichtung strömt.

2. Heizvorrichtung nach Anspruch 1, dadurch gekennzeichnet, daß die Heizvorrichtung (32) mit dem Kühlmittelkreislauf (12) der Brennkraftmaschine (10) leitungsverbunden ist.

3. Heizvorrichtung nach Anspruch 2, dadurch gekennzeichnet, daß deren Zulaufleitung (24, 30) in Strömungsrichtung (15) der Kühlflüssigkeit hinter der Brennkraftmaschine (10) und deren Ablaufleitung (34) über den Wärmetauscher (36) führend vor der Brennkraftmaschine (10) an den Kühlkreislauf (12) angeschlossen sind, wobei sich zwischen den beiden Anschlußstellen ein Kühler (20) des Kühlkreislaufs (12) befindet.

4. Heizvorrichtung nach Anspruch 3, dadurch gekennzeichnet, daß in der Zulaufleitung (24) ein Förderaggregat (26) für die Kühlflüssigkeit angeordnet ist.

5. Heizvorrichtung nach einem der Ansprüche 3 oder 4, dadurch gekennzeichnet, daß in einer die Kammer (48) umgebenden Wand (46) zumindest ein Kanal (62) für die Kühlflüssigkeit der Brennkraftmaschine (10) angeordnet ist, an den die Zulaufleitung (30) und die Ablaufleitung (34) angeschlossen sind.

6. Heizvorrichtung nach einem der Ansprüche 1 bis 5, dadurch gekennzeichnet, daß das umlaufend angetriebene Element (50) ein in der Kammerwand (46) lagerndes Rad (50) ist, dessen im wesentlichen zylindrischer Umfangsfläche (80) über einen Spalt einen Bereich der Kammerwandinnenseite (82) zugeordnet ist.

7. Heizvorrichtung nach einem der Ansprüche 1 bis 6, dadurch gekennzeichnet, daß in Richtung der Drehachse des Rades (50) neben diesem in der Kammerwand (46) eine Viskoseflüssigkeits-Vorratskammer (58) angeordnet ist, die in ihrem unteren Bereich mit der das Rad (50) enthaltenen Kammer (48) leitungsverbunden ist.

8. Heizvorrichtung nach Anspruch 7, dadurch gekennzeichnet, daß die Leitung (66) zwischen der Radkammer (48) und der Vorratskammer (58) über eine temperaturabhängig betätigbares Glied (74) verschließbar und öffenbar ist.

9. Heizvorrichtung nach einem der Ansprüche 7 oder 8, dadurch gekennzeichnet, daß die Kammer (48) in ihrem oberen Bereich einen zur Vorratskammer (58) führenden Kanal (68) aufweist, in dessen arbeitskammerseitigen Mündungsbereich eine an der Mantelfläche (80) des Rades (50) wirksame Abstreifvorrichtung für die Viskoseflüssigkeit (78) angeordnet ist.

10. Heizvorrichtung nach einem der Ansprüche 6 bis 9, dadurch gekennzeichnet, daß das Rad (50) an seiner Umfangsfläche (80) ein Profil aufweist, das die Viskoseflüssigkeit (78) zum Abstreifer transportiert.

11. Heizvorrichtung nach einem der Ansprüche 6 bis 10, dadurch gekennzeichnet, daß die Kammerwand (64) einen die Umfangsfläche (80) des Rades (50) umgebenden Ring (102) verdrehbar führt, dessen Innenwand die eine Begrenzung des zur Umfangsfläche (80) vorhandenen Spaltes bildet.

12. Heizvorrichtung nach Anspruch 11, dadurch gekennzeichnet, daß vorzugsweise im tiefsten Bereich der Kammer (48) in der Kammerwand (64) mindestens eine Vertiefung (114) angeordnet ist und daß der Ring (102) wenigstens eine im wesentlichen radial verlaufende Bohrung (112) aufweist, welche in einer ersten Betriebsstellung des Rings (102) in die Vertiefung (114) mündet.

13. Heizvorrichtung nach Anspruch 12, dadurch gekennzeichnet, daß der Ring (102) in eine zweite Betriebsstellung drehbar ist, in welcher sich die Bohrung außerhalb der Vertiefung (114) befindet.

14. Heizvorrichtung nach Anspruch 13, dadurch gekennzeichnet, daß der Ring (102 bzw. 100) entgegen der Drehrichtung (Pfeil 116) des Rades (50) vorgespannt ist.

15. Heizvorrichtung nach Anspruch 14, dadurch gekennzeichnet, daß zur Vorspannung des Rings (102 bzw. 100) eine Spiralfeder (108) angeordnet ist, deren eines Ende an dem Ring (100) befestigt und deren anderes Ende an dem Gehäuse (46, 47) festgelegt ist.

## Claims

1. Heating device for the passenger compartment of a motor vehicle having a liquid-cooled internal-combustion engine (10), with an element (50) which is rotatingly driven in a medium-filled chamber (58) by the internal-combustion engine (10) and to which a fixedly arranged component is assigned via at least one gap, characterized in that in the chamber (58) there is a viscous liquid (78), in that the chamber (58) is surrounded by the flow of the cooling liquid of the internal-combustion engine (10), and in that this cooling liquid flows from the heating device (32) to a heat exchanger (36) in the passenger compartment (28) and from there via the internal-combustion engine (10) back to the heating device.

2. Heating device according to Claim 1, characterized in that the heating device (32) is line-connected to the coolant circuit (12) of the internal-combustion engine (10).

3. Heating device according to Claim 2, characterized in that, in the direction of flow (15) of the cooling liquid, the supply line (24, 30) of the said device is connected downstream of the internal-combustion engine (10) and the discharge line (34) of the said device, leading via the heat exchanger (36) is connected upstream of the internal-combustion engine (10) to the cooling circuit (12), a radiator (20) of the cooling circuit (12) being located between the two connection points.

4. Heating device according to Claim 3, characterized in that a feed unit (26) for the cooling liquid is arranged in the supply line (24).

5. Heating device according to one of Claims 3 or 4, characterized in that in a wall (46) surrounding the chamber (48) there is arranged at least one duct (62) for the cooling liquid of the internal-combustion engine (10), to which duct the supply line (30) and the discharge line (34) are connected.

6. Heating device according to one of Claims 1 to 5, characterized in that the rotatingly driven element (50) is a wheel (50) which is mounted in the chamber wall (46) and the essentially cylindrical circumferential area (80) of which is assigned, via a gap, a region of the chamber wall inner side (82).

7. Heating device according to one of Claims 1 to 6, characterized in that, in the direction of the axis of rotation of the wheel (50) there is arranged next to the latter in the chamber wall (46) a viscous-liquid storage chamber (58), which is line-connected in its lower region to the chamber (48) containing the wheel (50).

8. Heating device according to Claim 7, characterized in that the line (66) between the wheel chamber (48) and the storage chamber (58) is capable of being closed and opened by means of a temperature-dependently operable element (74).

9. Heating device according to one of Claims 7 or 8, characterized in that the chamber (48) has in its upper region a duct (68), which leads to the storage chamber (58) and in the mouth region of which on the working chamber side there is arranged a wiping device for the viscous liquid (78), the said wiping device acting on the lateral surface (80) of the wheel (50).

10. Heating device according to one of Claims 6 to 9, characterized in that the wheel (50) has on its circumferential area (80) a profile which transports the viscous liquid (78) to the wiper.

11. Heating device according to one of Claims 6 to 10, characterized in that the chamber wall (64) rotatably guides a ring (102) which surrounds the circumferential area (80) of the wheel (50) and the inner wall of which forms the one limitation of the gap present with respect to the circumferential area (80).

12. Heating device according to Claim 11, characterized in that at least one depression (114) is arranged in the chamber wall (64), preferably in the lowermost region of the chamber (48), and in that the ring (102) has at least one essentially radially running bore (112), which in a first operating position of the ring (102) opens out into the depression (114).

13. Heating device according to Claim 12, characterized in that the ring (102) can be rotated into a second operating position, in which the bore is located outside the depression (114).

14. Heating device according to Claim 13, characterized in that the ring (102 or 100) is prestressed against the direction of rotation (arrow 116) of the wheel (50).

15. Heating device according to Claim 14, characterized in that, for prestressing the ring (102 or 100), there is arranged a spiral spring (108), the one end of which is fastened on the ring (100) and the other end of which is fixed on the housing (46, 47).

## Revendications

1. Dispositif de chauffage pour l'habitacle des passagers d'un véhicule à moteur muni d'un moteur à combustion interne (10) refroidi par du liquide, avec un élément (50) entraîné en rotation par le moteur à combustion interne (10) dans une chambre (58) remplie d'un agent fluide, élément auquel correspond une pièce constitutive disposée de façon solidaire du bâti par au moins une fente, dispositif de chauffage caractérisé en ce qu'un liquide visqueux (78) se trouve dans la chambre (58), en ce que la chambre (58) est rincée par le liquide de refroidissement du moteur à combustion interne (10) et en ce que ce liquide de refroidissement coule du dispositif de chauffage (32) vers un échangeur de chaleur (36) dans l'habitacle des passagers (28) et à partir de là, via le moteur à combustion interne (10), de nouveau vers le dispositif de chauffage.

2. Dispositif de chauffage selon la revendication 1, caractérisé en ce que le dispositif de chauffage (32) est relié au circuit d'agent de refroidissement (12) du moteur à combustion interne (10).

3. Dispositif de chauffage selon la revendication 2, caractérisé en ce que sa conduite d'entrée (24, 30) dans le sens de l'écoulement (15) du liquide de refroidissement derrière le moteur à combustion interne (10) et sa conduite de sortie (34), sont raccordées via l'échangeur de chaleur (36) menant, avant le moteur à combustion interne, au circuit de refroidissement (12), un radiateur (20) du circuit de refroidissement (12) se trouvant entre les deux points de raccordement.

4. Dispositif de chauffage selon la revendication 3, caractérisé en ce que dans la conduite d'entrée (24) est disposé un ensemble de refoulement (26) pour le liquide de refroidissement.

5. Dispositif de chauffage selon l'une des revendications 3 ou 4, caractérisé en ce que dans une paroi (46) entourant la chambre (48) est disposé au moins un canal (62) pour le liquide de refroidissement du moteur à combustion interne (10), auquel sont raccordées la conduite d'arrivée (30) et la conduite de départ (34).

6. Dispositif de chauffage selon l'une des revendications 1 à 5, caractérisé en ce que l'élément (50) entraîné en rotation est une roue (50) montée dans la paroi de la chambre (46), roue dont la surface périphérique sensiblement cylindrique (80) est associée par une fente à une zone du côté interne de la paroi de la chambre (82).

7. Dispositif de chauffage selon l'une des revendications 1 à 6, caractérisé en ce que dans le sens de l'axe de rotation de la roue (50) est disposée, en plus de celle-ci dans la paroi de la chambre (46), une chambre de réserve (58) de liquide visqueux qui est reliée dans sa zone inférieure à la chambre (48) contenant la roue (50).

8. Dispositif de chauffage selon la revendication 7, caractérisé en ce que la conduite (66) peut coulisser et être ouverte entre la chambre de la roue (48) et la chambre de réserve (58) via un organe (74) qui peut être actionné en fonction de la température.

9. Dispositif de chauffage selon l'une des revendications 7 ou 8, caractérisé en ce que la chambre (48) présente dans sa zone supérieure un canal (68) menant à la chambre de réserve (58), dans l'embouchure duquel, cette embouchure étant située du côté de la chambre de travail, est disposé un dispositif de raclage efficace sur la surface enveloppe (80) de la roue (50) pour le liquide visqueux (78).

10. Dispositif de chauffage selon l'une des revendications 6 à 9, caractérisé en ce que la roue (50) présente sur sa surface périphérique (80) un profil qui transporte le liquide visqueux (78) jusqu'au racleur.

11. Dispositif de chauffage selon l'une des revendications 6 à 10, caractérisé en ce que la paroi de la chambre (64) guide en pouvant tourner un anneau (102) entourant la surface périphérique (80) de la roue (50), anneau dont la paroi interne forme l'une des limites de la fente existant en direction de la surface périphérique (80).

12. Dispositif de chauffage selon la revendication 11, caractérisé en ce que de préférence dans la zone la plus basse de la chambre (48) est disposé dans la paroi de la chambre (64) au moins un renforcement (114), et en ce que l'anneau (102) présente au moins un alésage (112) s'étendant sensiblement de façon radiale, alésage qui débouche dans une première position de fonctionnement de l'anneau (102) dans le renfoncement (114).

13. Dispositif de chauffage selon la revendication 12, caractérisé en ce que l'anneau (102) peut tourner dans une deuxième position de fonctionnement, dans laquelle l'alésage se trouve en dehors du renfoncement (114).

14. Dispositif de chauffage selon la revendication 13, caractérisé en ce que l'anneau (102 ou 100) est précontraint en sens opposé du sens de rotation (flèche 116) de la roue (50).

15. Dispositif de chauffage selon la revendication 14, caractérisé en ce que pour précontraindre l'anneau (102 ou 100) on dispose un ressort hélicoïdal (108) dont l'une des extrémités est fixée sur l'anneau (100) et dont l'autre extrémité est fixée sur le carter (46, 47).
